**Europäisches Patentamt**

**European Patent Office**

**Office européen des brevets**

(19)

(11) Veröffentlichungsnummer: **0 284 869 B1**

# (12) EUROPÄISCHE PATENTSCHRIFT

(45) Veröffentlichungstag der Patentschrift: **16.10.91**

(51) Int. Cl.⁵: **H02H 9/04**, H02H 7/122

(21) Anmeldenummer: **88104033.1**

(22) Anmeldetag: **14.03.88**

(54) **Schaltungsanordnung zur Speisung mittels Gleichstrom-Reihenspeisung.**

(30) Priorität: **31.03.87 DE 3710653**

(43) Veröffentlichungstag der Anmeldung:
**05.10.88 Patentblatt 88/40**

(45) Bekanntmachung des Hinweises auf die
Patenterteilung:
**16.10.91 Patentblatt 91/42**

(84) Benannte Vertragsstaaten:
**DE FR GB IT**

(56) Entgegenhaltungen:
**EP-A- 0 169 462**
**EP-A- 0 203 847**
**DE-A- 1 901 075**
**FR-A- 2 239 766**

(73) Patentinhaber: **SIEMENS AKTIENGESELL-
SCHAFT**
**Wittelsbacherplatz 2**
**W-8000 München 2(DE)**

(72) Erfinder: **Musil, Gerhard, Dipl.-Ing.**
**Ludwig-Braille-Strasse 8**
**W-8000 München 70(DE)**

## Beschreibung

Die Erfindung bezieht sich auf eine wie im Oberbegriff des Patentanspruchs 1 angegebene Schaltungsanordnung zur Fernspeisung von elektrischen Verbrauchern.

Eine derartige Schaltungsanordnung ist bereits aus der EP-AI-0 169 462 bekannt. Die bekannte Schaltungsanordnung dient zur Gleichstrom-Reihenspeisung von elektrischen Verbrauchern. Den ferngespeisten Verbrauchern ist jeweils ein Gleichstrom-Gleichspannungs-Umrichtervorgeschaltet. Die Umrichter enthalten jeweils einen Schaltregler mit einem parallel zum Eingang angeordneten Schaltglied und einem über eine Diode daran angeschlossenen Kondensator. Eine Ausführungsform der bekannten Schaltungsanordnung enthält außer einem solchen Schaltregler eine Vorrichtung zur Hilfsspannungserzeugung. Um während der Zeit des Anlaufens der Hilfsspannung am Eingang des eigentlichen Strom-Spannungs-Umrichters keine undefiniert hochlaufende Spannung zu bekommen, ist parallel zum Eingang des Schaltreglers ein Schalter vorgesehen. Dieser Schalter ist zunächst geschlossen und wird erst bei vorhandener Hilfsspannung geöffnet. Während des normalen Betriebs bleibt der Schalter ständig geöffnet.

Aufgabe der Erfindung ist es, eine wie im Oberbegriff des Patentanspruchs 1 angegebene Schaltungsanordnung derart auszubilden, daß die Fernspeisung auch dann aufrecht erhalten bleibt, wenn im Falle eines Defektes ein Umrichter an seinem Eingang hochohmig wird. Insbesondere soll die Speisung der Verbraucher dann aufrecht erhalten bleiben, wenn in einer ferngespeisten Zwischenstelle von zwei aus Redundanzgründen vorgesehenen Gleichstrom-Gleichspannungs-Umrichtern einer an seinem Eingang hochohmig wird und/oder wenn in den Zwischenstellen jeweils mehrere Verbraucher aus dem Fernspeisekreis gespeist werden.

Gemäß der Erfindung wird die Schaltungsanordnung zur Lösung dieser Aufgabe in der im kennzeichnenden Teil des Patentanspruchs 1 angegebenen Weise ausgebildet.

Der steuerbare Schalter, der im einen Schaltzustand hochohmig und im anderen Schaltzustand niederohmig ist, kann parallel zu einem Umrichtereingang oder parallel zu einer Serienschaltung an mehreren Umrichtereingängen liegen. Insbesondere liegt er parallel zum Eingang einer Umrichter-Baueinheit, die zusätzlich zum eigentlichen Umrichter einen oder mehrere Hilfsumrichter enthalten kann. Bei gespeisten Stellen mit redundanten Umrichterschaltungen ist jede dieser Umrichterschaltungen mit einer eigenen bistabilen Schaltvorrichtung zu versehen.

Durch diese Maßnahmen ergibt sich der Vorteil, daß die Überbrückung eines oder mehrerer Umrichter-Eingänge so lange anhält, bis sie durch entsprechende Maßnahmen rückgängig gemacht wird. Diese Maßnahmen können insbesondere darin bestehen, daß der Überbrückungszweig vorübergehend kurzgeschlossen wird, insbesondere durch eine, in einer Umrichterbaueinheit vorgesehene Taste oder eine in einer Aufnahmevorrichtung vorgesehene Kurzschlußbrücke.

Vorteilhafte weitere Ausgestaltungen der Erfindung ergeben sich aus den Unteransprüchen.

Die Maßnahmen nach Anspruch 2 haben den Vorteil, daß der Fernspeisekreis auch bei einem Herausnehmen eines Umrichters aus einer zugehörigen Anschlußvorrichtung selbsttätig geschlossen wird.

Die Weiterbildung nach Anspruch 3 hat den Vorteil, daß die bistabile Schaltvorrichtung einer Umrichter-Baueinheit selbsttätig in den einen bzw. in ihren Ruhezustand übergeht, wenn die betreffende Baueinheit aus ihrer Anschlußvorrichtung herausgenommen wird. Andererseits läßt sich die bistabile Schaltvorrichtung nach Anspruch 3 für den Fall, daß sie in einer Anschlußvorrichtung enthalten ist, auf einfache Weise durch die in Anspruch 6 angegebenen Maßnahmen in ihren Ruhezustand überführen. Besonders vorteilhaft ist die im Anspruch 7 angegebene Art der Herbeiführung des Kurzschlusses, der die Schaltvorrichtung in ihren Ruhezustand überführt.

Eine zweckmäßige Weiterbildung der Erfindung, bei der die bistabile Schaltvorrichtung in vorteilhafter Weise mit einer Anordnung zum Überspannungsschutz kombiniert ist, geht aus Anspruch 8 hervor.

Bildet man die Schaltungsanordnung entsprechend Anspruch 9 aus, so spricht die bistabile Schaltvorrichtung in vorteilhafter Weise auch auf unzulässige Temperaturerhöhungen im Umrichter an.

Die Maßnahmen nach Anspruch 10 gestatten es, zusätzlich zu Überspannungen am Eingang des Umrichters auch unzulässige Abweichungen von Größen als Auslösekriterium zu erfassen, die für ein fehlerfreies Arbeiten des Umrichters typisch sind. Eine solche Größe kann insbesondere eine Hilfsspannung sein.

Bei der Weiterbildung nach Anspruch 11 kann die Vorrichtung zur Rücksetzung einer bistabilen Schaltvorrichtung eine Taste sein, die die Selbsthaltung der bistabilen Schaltvorrichtung aufhebt. Eine solche Taste kann insbesondere die Ansteuerung eines Schalters der Schaltvorrichtung durch Kurzschließen aufheben. Anstelle einer manuell betätigten Taste kann ein steuerbarer Schalter Verwendung finden. In der Anschlußvorrichtung kann insbesondere ein durch die Umrichter-Baueinheit mechanisch steuerbarer Ruhekontakt vorgesehen sein, der bei eingesetzter Umrichter-Baueinheit geöffnet und bei unbestückter Anschlußvorrichtung geschlossen ist.

Die Erfindung wird anhand der in den Figuren dargestellen Ausführungsbeispiele näher erläutert. Es zeigen

Fig. 1    eine Schaltungsanordnung zur Fernspeisung von elektrischen Verbrauchern mittels Gleichstrom-Reihenspeisung,

Fig. 2    zwei Umrichter-Baueinheiten mit je einer bistabilen Schaltungsanordnung in einer zugehörigen Anschlußvorrichtung,

Fig. 3    zwei jeweils mit einer bistabilen Schaltvorrichtung versehene Umrichter-Baueinheiten,

Fig. 4    zwei Umrichter-Baueinheiten zur redundanten Speisung eines Verbrauchers,

Fig. 5    eine Umrichter-Baueinheit, in deren Anschlußvorrichtung eine bistabile Schaltvorrichtung mit Mitteln zum Überspannungsschutz kombiniert ist und

Fig. 6    eine Umrichter-Baueinheit mit einer Relaisanordnung als bistabile Schaltvorrichtung.

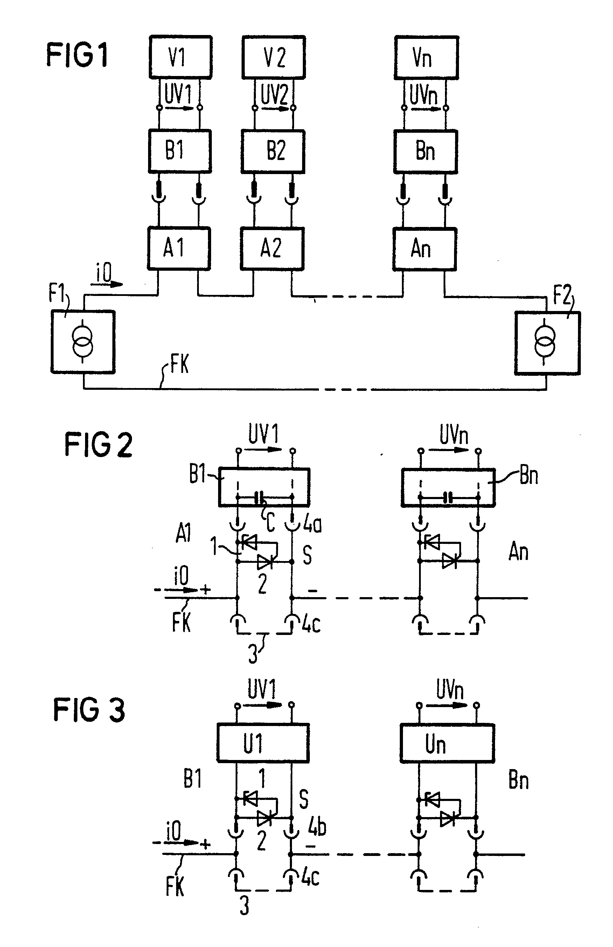

In Fig. 1 ist eine Schaltungsanordnung zur Fernspeisung von elektrischen Verbrauchern als Blockschaltbild dargestellt. Die Fernspeisegeräte F1 und F2 sind in zwei Endstellen einer zu speisenden Einrichtung angeordnet und mit ihren Ausgängen in den Fernspeisekreis FK eingeschleift. Eines der beiden Fernspeisegeräte F1 und F2 kann gegebenenfalls durch einen Kurzschluß ersetzt sein.

Die fernzuspeisenden Verbraucher V1, V2 ... Vn werden an ihrem Speiseeingang am besten mit konstanter Spannung betrieben. Die Umrichter-Baueinheiten B1, B2 ... Bn enthalten daher jeweils einen nicht dargestellten Schaltregler, der den an seinem Eingang eingeprägten Strom i0 in eine konstante Spannung UV1, UV2 ... UVn für den betreffenden Verbraucher umwandelt. Beispielsweise können Umrichter Verwendung finden, wie sie aus der EP-AI-0 169 462 bekannt sind.

Jeder Umrichter-Baueinheit ist eine Anschlußvorrichtung A1, A2 ... An zugeordnet, die mit ihrem Eingang im Zuge des Fernspeisekreises FK liegt und deren Ausgang mit der zugeordneten Umrichter-Baueinheit verbunden ist. Im einfachsten Fall stellt die Anschlußvorrichtung lediglich die Verbindung zwischen dem Umrichtereingang und dem Fernspeisekreis her.

Die in Fig. 1 gezeigte Schaltungsanordnung dient insbesondere zur Speisung von Regeneratoren von Nachrichtenübertragungseinrichtungen. Mehrere Verbraucher V werden über einen gemeinsamen Fernspeisekreis FK versorgt. Dabei wird der eingeprägte Strom i0 von wenigstens einer der Quellen F1 und F2 zu den Umrichter-Baueinheiten B1 ... Bn geführt, die daraus die Versorgungsspannung bzw. Versorgungsspannungen für die Verbraucher V1 ... Vn erzeugen. Wenn einer der Umrichter durch einen Defekt am Eingang hochohmig wird, ist dadurch der gesamte Speisekreis unterbrochen. Ein Teilbetrieb oder eine Redundanzschaltung von Umrichtern, bei der die Eingänge in Serie, die Ausgänge entkoppelt parallel geschaltet sind, ist dann nicht ohne weiteres möglich.

Aus - meist systemtechnischen - Gründen ist es im allgemeinen nötig, daß die Eingangsspannung der einzelnen Umrichter einen vorgegebenen maximalen Wert, der der maximalen Ausgangsleistung entspricht, nicht überschreitet. Jeder Umrichtereingang ist zum Schutz mit einer bistabilen Schaltvorrichtung S versehen, die beim Überschreiten dieser vorgegebenen, für regulären Betrieb maximalen Eingangsspannung den jeweiligen Eingang kurzschließt. Für eine solche bistabile Schaltungsanordnung gibt es verschiedene Möglichkeiten. Beispielsweise kann als Schaltglied ein Transistor oder ein Relaiskontakt Verwendung finden. Bei der in Fig. 2 dargestellten Schaltungsanordnung ist der Kurzschlußschalter ein Thyristor 2, der von der Z-Diode 1 angesteuert wird.

Die in Fig. 2 gezeigte Schaltungsanordnung zeigt für die Schaltungsanordnung nach Fig. 1 weitere Einzelheiten im Zusammenhang mit den Umrichter-Baueinheiten B1 ... Bn. Die Baueinheit B1 enthält einen nicht näher dargestellten Umrichter, an dessen Eingang ein Kondensator C wirksam ist. Die zugeordnete Anschlußvorrichtung A1 enthält die bistabile Schaltvorrichtung S, die ihrerseits den mit seiner Anoden-Kathoden-Strecke in den Fernspeisekreis FK eingefügten Thyristor 2 aufweist. Zwischen der Steuerelektrode und der Anode des Thyristors 2 liegt die Z-Diode 1. Die Anoden-Kathoden-Strecke des Thyristors 2 ist über die Steckverbindung 4a mit dem Eingang der Umrichter-Baugruppe B1 verbunden und läßt sich ferner über die Steckverbindung 4c mit Hilfe des Kurzschlußsteckers 3 kurzschließen.

Wird der in der Umrichter-Baueinheit B1 enthaltene Umrichter an seinem Eingang hochohmig, so übersteigt seine Eingangsspannung einen Wert, bei dem der Thyristor 2 zündet. Die bistabile Schaltvorrichtung S geht daher - ausgehend von dem einen Ruhezustand, bei dem der Thyristor 2 hochohmig ist - in den anderen Schaltzustand über, bei dem sie einen Kurzschluß darstellt.

Nimmt man die Umrichter-Baueinheit B1 aus der Anschlußvorrichtung A1 heraus, so verbleibt die bistabile Schaltvorrichtung S im stromführenden Zustand. Wird die Umrichter-Baueinheit B1 nach Behebung des Fehlers wieder in die Anschlußvorrichtung A1 eingesetzt, so sorgt der an ihrem Eingang wirksame Kondensator dafür, daß der Thyristor 2 gelöscht wird. Der Fernspeisestrom i0 fließt somit wieder über den Eingang der Umrichter-Baugruppe B1.

Mit Hilfe des normalerweise nicht eingesetzten Kurzschlußsteckers 3 ist es möglich, die bistabile Schaltvorrichtung S in ihren Ausgangszustand zu überführen, ohne die Umrichter-Baueinheit B1 auch nur vorübergehend aus der Anschlußvorrichtung A1 herauszunehmen.

Die weiteren Umrichter-Baueinheiten und die zugehörigen Anschlußvorrichtungen sind in gleicher Weise ausgebildet, wie die Umrichter-Baueinheit B1.

Im normalen Betrieb ist die bistabile Schaltvorrichtung wirkungslos. Ist jedoch der Eingang eines Umrichters infolge eines Defektes hochohmig geworden, so wird nur kurzzeitig eine erhöhte Spannung benötigt. Auf das Gesamtsystem bezogen ist diese Erhöhung gering und stört daher den Betrieb nicht.

Bei der Schaltungsanordnung nach Fig. 3 ist die Umrichter-Baueinheit B1 selbst mit der bistabilen Schaltvorrichtung S versehen. Die Umrichter-Baueinheit B1 enthält den Gleichstrom-Gleichspannungs-Umrichter U1. Parallel zum Eingang des Umrichters U1 liegt die Anoden-Kathoden-Strecke des Thyristors 2, bei dem zwischen Steuerelektrode und Anode die Z-Diode 1 angeordnet ist. Der Kurzschlußstecker 3 ist wie bei der Schaltungsanordnung nach Fig. 2 bei Normalbetrieb nicht in die Anschlußvorrichtung A1 eingesetzt. Setzt man den Kurzschlußstecker 3 in die Anschlußvorrichtung A1 ein, bevor die Umrichter-Baueinheit B1 aus ihrer Aufnahmevorrichtung gezogen wird, so bleibt die Fernspeisung für die übrigen Umrichter-Baueinheiten weiter bestehen.

Bei der Schaltungsanordnung nach Fig. 2 ist die bistabile Schaltvorrichtung getrennt vom zu schützenden Umrichter angeordnet. Sie sollte dann beim Austausch einer defekten Umrichter-Baueinheit möglichst selbsttätig entriegelt werden. Dies geschieht bei der Schaltungsanordnung nach Fig. 2 automatisch durch einen zunächst ungeladenen Eingangskondensator der neuen Umrichter-Baueinheit.

Entsprechend Fig. 3 ist die bistabile Schaltvorrichtung in der zu schützenden Umrichter-Baueinheit B1 untergebracht.

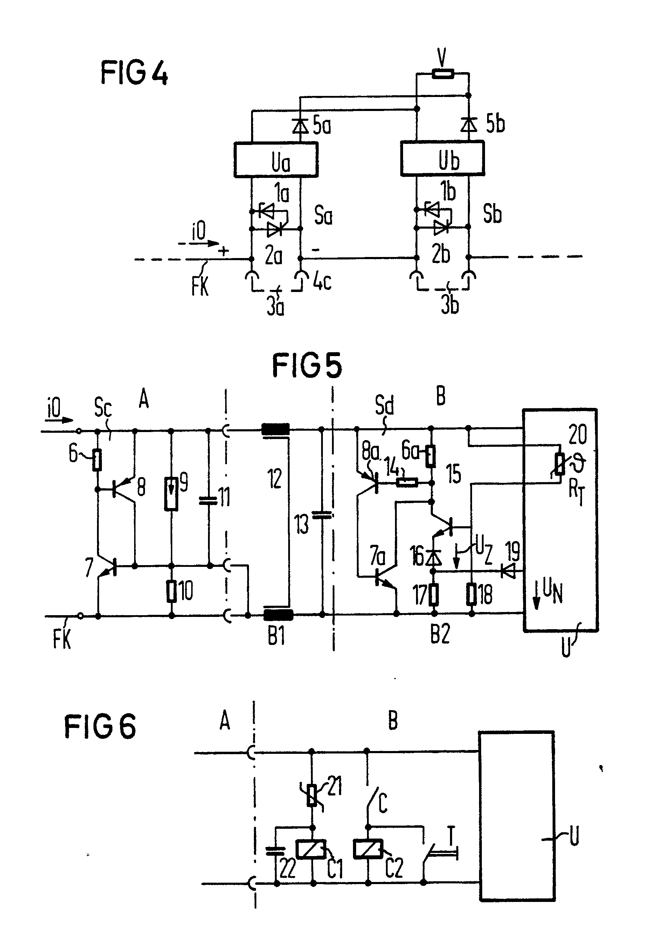

Fig. 4 zeigt zwei Umrichter-Baueinheiten, die gemeinsam den Verbraucher V speisen. Zwecks Redundanz sind die Umrichter-Baugruppen Ua und Ub mit ihren Eingängen in Serie und mit ihren Ausgängen über die Entkopplungsdioden 5a und 5b parallel geschaltet.

Jedem der Umrichter Ua und Ub ist eine bistabile Schaltvorrichtung Sa bzw. Sb zugeordnet. Die bistabile Schaltvorrichtung Sa bzw. Sb kann jeweils mit dem betreffenden Umrichter Ua bzw. Ub in der betreffenden Umrichter-Baueinheit oder in der zugeordneten Anschlußvorrichtung untergebracht sein. Je Anschlußvorrichtung ist ein steckbarer Kurzschlußstecker 3a bzw. 3b vorgesehen, mit dessen Hilfe der Fernspeisebetrieb beim Austauschen eines der beiden Umrichter aufrecht erhalten wird.

Da die bistabile Schaltungsanordnung in der zu schützenden Umrichter-Baueinheit enthalten ist, wird sie beim Austausch mit entfernt. Dabei lassen sich Betriebsunterbrechungen dadurch vermeiden, daß der Eingang durch den Kurzschlußstecker 3 überbrückt wird. Anstelle des Kurzschlußsteckers 3 kann gegebenenfalls ein mechanisch betätigter Ruhekontakt in der Anschlußvorrichtung bzw. in einer als Anschlußvorrichtung dienenden Gestellaufnahme Verwendung finden, da dann beim Austausch der Betrieb nicht gestört wird.

Um auch den Fall erfassen zu können, daß ein defekter Umrichter den vorgegebenen Eingangsspannungsbereich nicht überschreitet, kann die als Schutzschaltung dienende bistabile Schaltvorrichtung auch von einer Schaltung angesteuert werden, die eine unzureichende Leistungsabgabe oder eine falsche Ausgangspannung des betreffenden Umrichters erfaßt. Als weiteres Auslösekriterium kann das Ansprechen eines Wärmefühlers bei unzulässiger Erhitzung des Gerätes dienen.

Eine Schaltungsanordnung, bei der eine Hilfsspannung und eine Temperatur mit überwacht werden, ist in Fig. 5 dargestellt.

Die in Fig. 5 gezeigte Schaltungsanordnung enthält die Anschlußvorrichtung A und die Umrichter-Baueinheit B mit dem Umrichter U. Sowohl in der Anschlußvorrichtung A als auch in der Umrichter-Baugruppe B ist jeweils eine eigene bistabile Schaltvorrichtung Sc bzw. Sd vorgesehen.

Bei der bistabilen Schaltvorrichtung Sc ist der Transistor 7 mit seinem Kollektor unmittelbar an die Basis des Transistors 8 und mit seinem Emitter unmittelbar an den Kollektor des Transistors 8 geführt. Die bistabile Schaltvorrichtung ist mit dem Emitter des Transistors 7 einerseits und dem Emitter des Transistors 8 andererseits an den Fernspeisekreis FK angeschlossen. Zwischen der Basis und dem Emitter des Transistors 8 liegt der Widerstand 6. Parallel zur Emitter-Kollektor-Strecke des Transistors 8 ist der Überspannungsableiter 9 und parallel dazu der Kondensator 11 angeordnet. Parallel zur Basis-Emitter-Strecke des Transistors 7 liegt der Widerstand 10.

Die Umrichter-Baueinheit B enthält an ihrem Eingang ein LC-Glied mit je einer Wicklung der Drossel 12 in den Längszweigen und dem Kondensator 13 in einem Querzweig. An den Kondensator 13 ist der Eingang des Umrichters U angeschlossen. Außerdem liegt parallel zum Kondensator 13 die bistabile Schaltvorrichtung Sd mit den Transistoren 7a und 8a. Die Basis des Transistors 7a ist mit dem Kollektor des Transistors 8a verbunden. Die Schaltvorrichtung Sa ist mit dem Emitter des Transistors 8a an den einen und mit dem Emitter des Transistors 7a an den anderen Anschluß des Kondensators 13 angeschlossen.

Der Kollektor des Transistors 7a ist über den Widerstand 14 an die Basis des Transistosrs 8a geführt.

Die bistabile Schaltvorrichtung Sd wird über den Transistor 15 angesteuert. Der Transistor 15 ist mit seiner Basis an einen Spannungsteiler 20,18 angeschlossen, dessen Widerstand 20 als temperaturabhängiger Widerstand ausgebildet und im Umrichter U angeordnet ist. Der Transistor 15 ist ferner mit seinem Kollektor über den Widerstand 6a an den einen und mit seinem Emitter über die aus der Z-Diode 16 und dem Widerstand 17 bestehende Serienschaltung an den anderen Anschluß des Kondensators 13 geführt. Eine im Umrichter U zur Verfügung stehende Hilfsspannung $U_h$ wird über die Diode 19 an den Verbindungspunkt von Z-Diode 16 und Widerstand 17 geführt. Die Z-Diode ist derart gepolt, daß sie für die am Eingang des Umrichtes U liegende Spannung in Sperrichtung gepolt ist.

Die Transistoren 7a und 8a bilden eine bistabile Kippstufe mit dem Transistor 7a als Leistungstransistor. Der Transistor 15 spricht auf zu hohe Spannungen am Eingang des Umrichter U an. Zu diesem Zweck vergleicht der Transistor 15 die Spannung am Abgriff des Spannungsteilers 20, 18 mit einer Referenzspannung. Diese Referenzspannung ist durch die Summe aus der Hilfsspannung $U_h$ des Umrichters U und der Zenerspannung $U_z$ der Z-Diode 16 vorgesehen. Verschwindet die Hilfsspannung $U_h$ des Umrichters U, so besteht die Referenzspannung aus der Zenerspannung $U_z$ allein.

Um einen Anlauf des Umrichters U zu ermöglichen, bei dem die Hilfsspannung $U_h$ zunächst nicht in voller Höhe zur Verfügung steht, muß die Zenerspannung $U_z$ ausreichend hoch bemessen werden um sicherzustellen, daß der Umrichter U die für den Anlauf benötigte Eingangsspannung aufnehmen kann, ohne daß dadurch die bistabile Schaltvorrichtung anspricht.

Da bei fehlender Hilfsspannung $U_h$ die Umrichter-Baueinheit B mit großer Wahrscheinlichkeit defekt ist, wird sie auf die genannte Weise zusätzlich überwacht. Der Heißleiter 20 löst die bistabile Schaltvorrichtung bei einer Überhitzung des Umrichters aus.

In der Anschlußvorrichtung A, die insbesondere durch einen Anschlußkasten oder eine gestellartige Aufnahmevorrichtung gebildet ist, befindet sich die mittels der Transistoren 7 und 8 realisierte bistabile Schaltvorrichtung Sc. Die Transistoren 7 und 8 bilden eine bistabile Kippstufe, deren Steuereingang die Basis des Transistors 7 ist. Die bistabile Kippstufe wird über den Überspannungsableiter 9 unter Mitwirkung des Kondensators 11 gezündet, wenn die Umrichterbaueinheit B - insbesondere im Falle eines Defektes - aus ihrer Aufnahmevorrichtung herausgezogen wird. Der Überspannungsableiter 9 und der Kondensator 11 als Bestandteil eines Entstörgliedes, gebildet durch den Kondensator 11, die Drossel 12 und den Kondensator 13, sind ohnehin erforderlich und stellen daher keinen Mehraufwand dar.

Die Ansprechspannung des Überspannungsableiters 9 ist größer als die maximale Eingangsspannung des Umrichters U.

Die Kapazität des Kondensators 11 ist so bemessen, daß beim Ziehen der Umrichter-Baueinheit B aus ihrer Aufnahmevorrichtung ein Durchsteuern von Transistor 7 auch ohne Zünden des Überspannungsableiters 9 erfolgt und damit die maximal erreichte Eingangsspannung bei relativ niedrigen Werten ist.

Die in Fig. 6 gezeigte Umrichter-Baueinheit B ist als steckbare Baueinheit ausgebildet und läßt sich als solche in die Anschlußvorrichtung A einsetzen. Die Umrichter-Baueinheit B enthält eine bistabile Schaltvorrichtung mit einem Relais in Selbsthalteschaltung. Das Relais ist mit zwei Wicklungen C1 und C2 und einem Arbeitskontakt c vorgesehen. Parallel zum Eingang der Umrichterschaltung U liegen die aus der Haltewicklung C2 und dem Arbeitskontakt c bestehende Serienschaltung und die aus dem Varistor 21 und der Wicklung C1 bestehende Serienschaltung. Parallel zur Haltewicklung C2 liegt ein Arbeitskontakt der Taste T, so daß die Haltewicklung C2 bei Betätigen der Taste kurzgeschlossen wird. Parallel zur Wicklung C1 liegt der Kondensator 22.

Die Wicklungen C1 und C2 gehören zu ein- und demselben Relais, das einen Arbeitskontakt c hat. Überschreitet die Eingangsspannung des Umrichters U eine gewisse Zeitlang einen vorgegebenen Wert, so wird der Kondensator 22 über den Varistor 21 aufgeladen. Schließlich bewirkt die von der Wicklung C1 erzeugte Durchflutung, daß der Kontakt c geschlossen wird. Dadurch bekommt die Wicklung C2 Strom und die Anordnung hält sich selbst. Mit Hilfe der Taste T kann sie wieder entriegelt werden. Für kurze Impulse, wie sie insbesondere durch Blitzeinwirkung entstehen können, verhält sich der Varistor 21 als Schutzglied. Dabei übernimmt er die Funktion des Überspannungsableiters 9 der in Fig. 5 gezeigten Umrichter-Baueinheit.

**Patentansprüche**

1. Schaltungsanordnung zur Speisung von elektrischen Verbrauchern (Vl...Vn) mittels Gleichstrom-Reihenspeisung aus wenigstens einer an einen Fernspeisekreis (FK) angeschlossenen Konstantstromquelle (F1,F2), wobei an verschiedenen Stellen des Speisekreises (FK) jeweils wenigstens eine einen Gleichstrom-Gleichspannungs-Umrichter enthaltende Umrichter-Baueinheit (B1...Bn;B) an den Fernspeisekreis (FK) anschließbar ist und parallel zum Eingang wenigstens eines der Umrichter (U1... Un,Ua,Ub,U) ein einen steuerbaren Schalter enthaltender Stromzweig angeordnet ist,
**dadurch gekennzeichnet,**
daß der steuerbare Schalter jeweils einer steuerbaren bistabilen Schaltvorrichtung (S,Sa,Sb,Sc,Sd) angehört, in deren einem Schaltzustand der steuerbare Schalter geöffnet und in derem anderen Schaltzustand der steuerbare Schalter geschlossen ist und daß die bistabile Schaltvorrichtung (S,Sa,Sb,Sc,Sd) jeweils durch die am geöffneten steuerbaren Schalter liegende Spannung derart steuerbar ist, daß sie bei Überschreiten eines vorgegebenen Grenzwertes der Eingangsspannung von dem einen in den anderen Schaltzustand übergeht.

2. Schaltungsanordnung nach Anspruch 1,
**dadurch gekennzeichnet,**
daß die Umrichter-Baueinheit (B1...Bn) und die zugehörige Anschlußvorrichtung (A1...An) jeweils eine bistabile Schaltvorrichtung (Sa,Sb) enthalten.

3. Schaltungsanordnung nach Anspruch 1 oder 2,
**dadurch gekennzeichnet,**
daß die in der Anschlußvorrichtung (A1...An) und/oder die in einer der Umrichter-Baueinheiten (B1...Bn) vorgesehene bistabile Schaltvorrichtung einen Thyristor (2,2a) enthält, dessen Anoden-Kathoden-Strecke als steuerbarer Schalter parallel zum Eingang des Umrichters (U1...Un) liegt.

4. Schaltungsanordnung nach Anspruch 1 oder 2,
**dadurch gekennzeichnet,**
daß die in der Anschlußvorrichtung (A1...An) und/oder die in einer der Umrichter-Baueinheiten (B1...Bn) vorgesehene bistabile Schaltvorrichtung ein Relais mit einem Arbeitskontakt (c) in Selbsthalteschaltung enthält.

5. Schaltungsanordnung nach Anspruch 1,
**dadurch gekennzeichnet,**
daß die in der Anschlußvorrichtung (A1...An,A) und/oder in der Umrichter-Baueinheit (B1...Bn,B) vorgesehene bistabile Schaltvorrichtung jeweils als steuerbaren Schalter einen Transistor enthält.

6. Schaltungsanordnungnach einem der Ansprüche 1 - 5,
**dadurch gekennzeichnet,**
daß die bistabile Schaltvorrichtung (Sb) der Anschlußvorrichtung (A) jeweils durch einen mittels der Umrichter-Baueinheit (B) herbeigeführten Kurzschlusses in den einen Schaltzustand überführbar ist, bei dem der steuerbare Schalter geöffnet ist.

7. Schaltungsanordnung nach Anspruch 6,
**dadurch gekennzeichnet,**
daß die Umrichter-Baueinheit (B) einen parallel zu ihrem Eingang liegenden Kondensator (C) enthält, der im entladenen Zustand den Kurzschluß herbeiführt.

8. Schaltungsanordnung nach Anspruch 5 und 6,
**dadurch gekennzeichnet,**
daß in den Anschlußvorrichtungen (A1...An) vorgesehene bistabile Schaltvorrichtungen (S) eine Serienschaltung aus einem Überspannungsableiter (9) und einem Serienwiderstand (10) und die Umrichter-Baueinheiten (B) eine parallel zum Serienwiderstand (10) liegende Kurzschlußbrücke enthalten und daß der steuerbare Schalter parallel zum Überspannungsableiter (9) angeordnet ist und daß bei unbestückter Anschlußvorrichtung (A1 ...An) die bistabile Schaltvorrichtung beim Zünden des Übergangsableiters (9) in den anderen Fallzustand überführbar ist.

9. Schaltungsanordnung nach einem der Ansprüche 1 - 8,
**dadurch gekennzeichnet,**
daß die bistabile Schaltvorrichtung einen Spannungsvergleicher enthält, der wenigstens einen Teil der Eingangsspannung des Umrichters mit einer Referenzspannung vergleicht und daß ein mit der Eingangsspannung des Umrichters beaufschlagbarer Spannungsteiler (20,18) einen temperaturabhängigen Widerstand (20) enthält.

10. Schaltungsanordnung nach einem der Ansprüche 1 - 8,
**dadurch gekennzeichnet,**
daß die bistabile Schaltvorrichtung einen Spannungsvergleicher enthält, der wenigstens einen Teil der Eingangsspannung des Umrichters mit einer Referenzspannung vergleicht und daß die Referenzspannung aus wenigstens zwei Spannungen zusammengesetzt ist, von denen eine aus mindestens einer für den Betriebszustand des Umrichters charakteristischen Größe gewonnen ist.

11. Schaltungsanordnung nach einem der vorhergehenden Ansprüche,
**dadurch gekennzeichnet,**
daß die Umrichter-Baueinheit und/oder die Anschlußvorrichtung eine Vorrichtung zur Rücksetzung wenigstens einer bistabilen Schaltungsanordnung in den einen Schaltzustand enthält.

## Claims

1. Circuit arrangement for supplying electrical loads (V1...Vn) using a DC series supply of at least one constant current source (F1, F2) connected to a remote supply circuit (FK), it being possible to connect in each case at least one converter module (B1...Bn; B), containing a DC current - DC voltage converter, to the remote supply circuit (FK) at various points in the supply circuit (FK) and a current branch containing a controllable switch being arranged in parallel with the input of at least one of the converters (U1...Un, Ua, Ub, U), characterized in that the controllable switch in each case is associated with a controllable bistable switching device (S, Sa, Sb, Sc, Sd), in whose one switching state the controllable switch is opened and in whose other switching state the controllable switch is closed and in that the bistable switching device (S, Sa, Sb, Sc, Sd) in each case is controllable by means of the voltage applied to the opened controllable switch, in such a manner that, if a specified limiting value of the input voltage is exceeded, the switching device changes from one switching state to the other.

2. Circuit arrangement according to Claim 1, characterized in that the converter module (B1...Bn) and the associated connecting device (A1...An) in each case contain a bistable switching device (Sa, Sb).

3. Circuit arrangement according to Claim 1 or 2, characterized in that the bistable switching device provided in the connecting device (A1...An) and/or in one of the converter modules (B1...Bn) contains a thyristor (2, 2a), whose anode-cathode path is located as a controllable switch in parallel with the input of the converter (U1...Un).

4. Circuit arrangement according to Claim 1 or 2, characterized in that the bistable switching device provided in the connecting device (A1...An) and/or in one of the converter modules (B1...Bn) contains a relay having a normally open contact (c) connected as a selflatching contact.

5. Circuit arrangement according to Claim 1, characterized in that the bistable switching device provided in the connecting device (A1...An, A) and/or in the converter module (B1...Bn, B) in each case contains a transistor as a controllable switch.

6. Circuit arrangement according to one of Claims 1 to 5, characterized in that the bistable switching device (Sb) of the connecting device (A) can in each case be transferred, by a short circuit created by means of the converter module (B), into the one switching state in which the controllable switch is open.

7. Circuit arrangement according to Claim 6, characterized in that the converter module (B) contains a capacitor (C) located in parallel with its input, which capacitor, in the discharged state, creates the short circuit.

8. Circuit arrangement according to Claims 5 and 6, characterized in that bistable switching devices (S) provided in the connecting devices (A1...An) contain a series circuit of an overvoltage arrester (9) and a series resistor (10) and the converter modules (B) contain a short circuit link located in parallel with the series resistor (10) and in that the controllable switch is arranged in parallel with the overvoltage arrester (9) and in that, with the connecting device (A1...An) unassembled, the bistable switching device can be transferred into the other logic state on triggering of the overvoltage arrester (9).

9. Circuit arrangement according to one of Claims 1 to 8, characterized in that the bistable switching device contains a voltage comparator which compares at least one part of the input voltage of the converter with a reference voltage, and in that a voltage divider (20, 18), to which can be applied the input voltage of the converter, contains a temperature-dependent resistor (20).

10. Circuit arrangement according to one of Claims 1 to 8, characterized in that the bistable switching device contains a voltage comparator which compares at least one part of the input voltage of the converter with a reference voltage, and in that the reference voltage is composed of at least two voltages, of which one is obtained from at least one characteristic parameter for the operating state of the converter.

11. Circuit arrangement according to one of the preceding claims, characterized in that the converter module and/or the connecting device contains a device for resetting at least one bistable switching arrangement into the one switching state.

**Revendications**

1. Montage pour alimenter des appareils d'utilisation électrique (VI...Vn) au moyen d'une alimentation à courant continu en série constituée par au moins une source de courant constant (F1, F2) raccordée à un circuit d'alimentation à distance (FK), et dans lequel respectivement au moins un module à convertisseur statique (B1...Bn; a), qui comporte un convertisseur courant continu-tension continue, peut être raccordé au circuit d'alimentation à distance (FK), en différents emplacements de ce circuit, et une branche de courant contenant un interrupteur commandable est branchée en parallèle avec l'entrée d'au moins l'un des convertisseurs statiques (U1...Un,Ua,Ub,U), caractérisé par le fait que l'interrupteur commandable fait partie respectivement d'un dispositif de commutation bistable commandable (S,Sa,Sb,Sc,Sd), dans un état de commutation duquel l'interrupteur commandable est ouvert, tandis que dans son autre état de commutation, l'interrupteur commandable est fermé, et que le dispositif de commutation bistable (S,Sa,Sb, Sc,Sd) peut être commandé respectivement par la tension appliquée à l'interrupteur commandable ouvert de sorte que, lors du dépassement d'une valeur limite prédéterminée de la tension d'entrée, le dispositif de commutation passe d'un état de commutation à l'autre.

2. Montage suivant la revendication 1, caractérisé par le fait que le module à convertisseur statique (B1...Bn) et le dispositif de raccordement associé (A1...An) contiennent respectivement un dispositif de commutation bistable (Sa,Sb).

3. Montage suivant la revendication 1 ou 2, caractérisé par le fait que le dispositif de commutation bistable prévu dans le dispositif de raccordement (A1...An) et/ou dans l'un des modules à convertisseur statique (B1...Bn), comporte un thyristor (2,2a) dont la voie anode-cathode est branchée, en tant qu'interrupteur commandable, en parallèle avec l'entrée du convertisseur statique (U1...Un).

4. Montage suivant la revendication 1 ou 2, caractérisé par le fait que le dispositif de commutation bistable prévu dans le dispositif de raccordement (A1...An) et/ou dans l'un des modules à convertisseur statique (B1...Bn), comporte un relais possédant un contact de travail (c) branché selon un circuit d'auto-entretien.

5. Montage suivant la revendication 1, caractérisé par le fait que le dispositif de commutation bistable prévu dans le dispositif de raccordement (A1 à An,A) et/ou dans le module à convertisseur statique (B1...Bn,B) comporte respectivement comme interrupteur commandable un transistor.

6. Montage suivant l'une des revendications 1-5, caractérisé par le fait que le dispositif de commutation bistable (Sb) du dispositif de raccordement (A) peut être placé, respectivement par un court-circuit réalisé au moyen du module à convertisseur statique (B), dans un état de commutation dans lequel l'interrupteur commandable est ouvert.

7. Montage suivant la revendication 6, caractérisé par le fait que le module à convertisseur statique (B) comporte un condensateur (C) qui est branché en parallèle avec l'entrée du module et établit le court-circuit à l'état déchargé.

8. Montage suivant les revendications 5 et 6, caractérisé par le fait que des dispositifs de commutation bistable (S) prévus dans les dispositifs de raccordement (A1 ...An) comportent un circuit série formé d'un dispositif (9) de dérivation des surtensions et d'une résistance série (10) et que les modules à convertisseur statique (B) comportent un pont de court-circuit branché en parallèle avec la résistance série (10), et que l'interrupteur commandable est branché en parallèle avec le dispositif (9) de dérivation des surtensions et que, dans le cas où un dispositif de raccordement (A1...An) n'est pas monté, le dispositif de commutation bistable peut être placé dans l'autre état retombé, lors de l'amorçage du dispositif (9) de dérivation des surtensions.

9. Montage suivant l'une des revendications 1-8, caractérisé par le fait que le dispositif de commutation bistable comporte un comparateur de tension qui compare au moins une partie de la tension d'entrée du convertisseur statique et une tension de référence, et qu'un dispositif (20,18) de dérivation des surtensions, qui peut être chargé par la tension d'entrée du convertisseur statique, comporte une résistance (20) qui dépend de la température.

10. Montage suivant l'une des revendications 1-8, caractérisé par le fait que le dispositif de commutation bistable comporte un comparateur de tension, qui compare au moins une partie de la tension d'entrée du convertisseur statique à une tension de référence, que la tension de référence est formée par la réunion d'au moins deux tensions, dont l'une est obtenue à partir d'au moins une grandeur caractéristique de l'état de fonctionnement du convertisseur statique.

11. Montage suivant l'une des revendications précédentes, caractérisé par le fait que le module à convertisseur statique et/ou le dispositif de raccordement comporte un dispositif pour ramener au moins un montage bistable dans un état de commutation.

FIG 1

FIG 2

FIG 3

FIG 4

FIG 5

FIG 6